# EUROPEAN PATENT APPLICATION

(11) **EP 3 174 197 A1**
(43) Date of publication of application: **31.05.2017**
(21) Application number: 15823926.9
(22) Date of filing: 24.07.2015
(51) Int. Cl.: H02S 40/38, H02S 40/42

(54) **POWER GENERATION DEVICE PROVIDED WITH SECONDARY BATTERY**

(30) Priority: 25.07.2014 JP 2014151836; 25.07.2014 JP 2014151837
(71) Applicant: Sekisui Chemical Co., Ltd., Osaka-shi, Osaka 530-8565 (JP)
(72) Inventor: HEISHI Masaru, Tsukuba-shi Ibaraki 300-4292 (JP); KANOH Masashi, Tsukuba-shi Ibaraki 300-4292 (JP); NOGAMI Mitsuhide, Tsukuba-shi Ibaraki 300-4292 (JP)
(74) Representative: Müller-Boré & Partner Patentanwälte PartG mbB
(86) International application number: PCT/JP2015/071120
(87) International publication number: WO 2016/013661

(57) **Abstract**

A power generation device (1) provided with a secondary battery includes a photoelectric conversion module (2), a secondary battery (3) electrically connected to the photoelectric conversion module (2), and an outer casing (4) in which the photoelectric conversion module (2) and the secondary battery (3) are installed. A low heat conducting material (5) or a heat reflector is installed on at least a part of the space between the photoelectric conversion module (2) and the secondary battery (3) to be interposed between the photoelectric conversion module (2) and the secondary battery (3).

## Description

### [Technical Field]

The present invention relates to a power generation device provided with a secondary battery.

Priority is claimed on Japanese Patent Application Nos. 2014-151836 and 2014-151837, filed on July 25, 2014, the contents of which are incorporated herein by reference.

### [Background Art]

Recently, power generation devices made up of photoelectric conversion modules such as solar cells have come to be used as power sources for driving various appliances installed outdoors, for instance a street lamp, an electric display device, or the like from the viewpoint of, for instance, ecology. A power generation device configured to be able to cope with use of various appliances at night by storing electric power produced by such a photoelectric conversion module in a lead-acid battery or the like is also used.

As means for storing the produced electric power, lithium ion secondary battery or the like that have excellent rechargeability and dischargeability and smaller sizes have come to be adopted in place of conventional lead-acid batteries. Since a lithium ion secondary battery is small and thin, a lithium ion secondary battery can be easily integrated with a power generation device such as a photoelectric conversion module, and various all-in-one power generation devices have been proposed. In such an all-in-one power generation device, a photoelectric conversion module and a lithium ion secondary battery are housed or installed in a common outer casing. Therefore, an all-in-one power generation device requires no external wires, can be made small, has an excellent design, and is highly effective from the viewpoint of preventing theft.

On the other hand, an all-in-one power generation device as described above is installed outdoors and is exposed to sunlight. Therefore, since an internal temperature of the outer casing is raised to about 70°C by radiant heat of the sunlight, and particularly in summer, a temperature of the lithium ion secondary battery can also be raised. Since heat caused by a battery reaction in the lithium ion secondary battery is generally generated during recharge and discharge, the temperature of the lithium ion secondary battery may be remarkably raised along with an increase in temperature caused by the sunlight. In this way, when the state in which the temperature of the lithium ion secondary battery is remarkably raised lasts a long time, there occurs a problem in which a cycle characteristic is degraded or evaporation of an electrolyte progresses and the battery swells. For this reason, it is necessary for such a power generation device to be provided with means for improving heat resistance of the lithium ion secondary battery or for cooling the lithium ion secondary battery.

Since the all-in-one power generation device described above suppresses an increase in the battery temperature, for example, a power generation device having a constitution in which a flat panel-like solar cell and flat panel-like power supplying means in which the cell is housed are vertically connected and are installed to lean against an installation site has been proposed (e.g., see Patent Document 1). According to the power generation device described in Patent Document 1, sunlight applied to the power supplying means side can be obstructed by the solar cell depending on the above constitution and the installation state, and there is a gap between the power supplying means and the solar cell. Thus, an increase in temperature of the power supplying means is suppressed.

A constitution in which an air layer is provided between a solar cell and a secondary battery and further an air hole communicating with this air layer is provided in an outer casing has been proposed (e.g. see Patent Document 2). According to the constitution described in Patent Document 2, external air is introduced into the air layer provided between the solar cell and the secondary battery through the air hole, and thereby an increase in temperature of the secondary battery is suppressed.

A constitution in which an outer casing in which a solar cell and electricity storing means are housed and installed is provided with a fan introducing external air therinto, and thereby the electricity storing means housed in the inside of the outer casing can be cooled has been proposed (e.g., see Patent Document 3). According to the constitution described in Patent Document 3, external air is introduced into the outer casing by the fan, and thereby an increase in temperature of the electricity storing means housed in the outer casing is suppressed.

However, in the configurations of all of Patent Documents 1 to 3, since the external air is introduced only in the vicinity of the cell, and particularly since the external air is also high in temperature during use under the hot summer sun, a cycle characteristic of the secondary battery may be degraded without sufficient cooling efficiency being obtained.

### [Citation List]

### [Patent Literature]

[Patent Document 1]
   Japanese Unexamined Patent Application, First Publication No. 2006-261567
[Patent Document 2]
   Japanese Unexamined Patent Application, First Publication No. 2013-048532
[Patent Document 3]
   Japanese Unexamined Patent Application, First Publication No. 2013-089317

### [Summary of Invention]

### [Technical Problem]

The present invention was conceived in view of the above problem, and provides a power generation device provided with a secondary battery, which can suppress a rise in temperature of the secondary battery even when a photoelectric conversion module and the secondary battery are integrated and used, and has an excellent cycle characteristic.

### [Solution to Problem]

Thus, to solve the above problem, the invention described in claim 1 includes: a photoelectric conversion module; a secondary battery electrically connected to the photoelectric conversion module; and an outer casing in which the photoelectric conversion module and the secondary battery are installed, wherein an insulating material is installed on at least a part of a space between the photoelectric conversion module and the secondary battery to be interposed between the photoelectric conversion module and the secondary battery.

According to the present invention, the insulating material is installed between the photoelectric conversion module and the secondary battery. Thereby, when sunlight is applied to the photoelectric conversion module, radiant heat caused by the sunlight is obstructed by the insulating material, so that an increase in temperature of the secondary battery can be suppressed.

The invention of claim 2 is characterized in that, with respect to the power generation device according to claim 1, the internal space of the outer casing is divided by the insulating material, thereby forming a plurality of chambers, and the secondary battery is installed in at least one of the plurality of chambers.

According to the present invention, the secondary battery is installed in at least one of the plurality of chambers formed by the insulating material. Thereby, the heat caused by the sunlight is obstructed, so that a increase in temperature of the secondary battery can be suppressed.

The invention of claim 3 is characterized in that the insulating material is a low heat conducting material.

According to the present invention, the low heat conducting material is disposed between the photoelectric conversion module and the secondary battery. Thereby, when the sunlight is applied to the photoelectric conversion module, conduction of the radiant heat emitted from the photoelectric conversion module toward the secondary battery is suppressed, so that an increase in temperature of the secondary battery can be suppressed.

The invention of claim 4 is characterized in that the insulating material is a heat reflector.

According to the present invention, the heat reflector is disposed between the photoelectric conversion module and the secondary battery. Thereby, when the sunlight is applied to the photoelectric conversion module, the radiant heat emitted from the photoelectric conversion module toward the secondary battery is reflected, so that an increase in temperature of the secondary battery can be suppressed.

The invention of claim 5 is characterized in that the insulating material is configured with a low heat conducting material and a heat reflector laminated on the low heat conducting material, and the low heat conducting material is disposed at the photoelectric conversion module side.

According to the present invention, the laminates of the low heat conducting material and the heat reflector are disposed between the photoelectric conversion module and the secondary battery, the radiant heat emitted from the photoelectric conversion module toward the secondary battery as described above can be obstructed by both reflection and suppression of heat conduction, so that an increase in temperature of the secondary battery can be remarkably suppressed.

The invention of claim 6 is characterized in that, in the power generation device according to any one of claims 1 to 5, a heat-radiating opening is formed at any position of the outer casing.

According to the present invention, the heat-radiating opening is provided in the outer casing. Thereby, the external air can be efficiently introduced inside, and an increase in temperature of the secondary battery can be further suppressed.

The invention of claim 7 is characterized in that, in the power generation device according to claim 6, the secondary battery includes a positive electrode terminal connected to a positive electrode collector, and a negative electrode terminal connected to a negative electrode collector, and the opening formed.in the outer casing is disposed to cause external air to linearly flow in toward a heat source region including a region connecting a connecting part between the positive electrode terminal and the positive electrode collector and a connecting part between the negative electrode terminal and the negative electrode collector at the shortest distance.

According to the present invention, the opening formed in the outer casing is disposed to cause the external air to linearly flow in toward the heat source region of the secondary battery, so that an increase in temperature of the secondary battery can be further suppressed.

The invention of claim 8 is characterized in that, in the power generation device according to any one of claims 1 to 7, a heat-radiating member is adhered to at least one of a surface opposite to a light-receiving surface of the photoelectric conversion module and a surface of the secondary battery.

According to the present invention, the heat-radiating member is adhered to at least either of the photoelectric conversion module and the secondary battery. Thereby, a heat-radiating effect is improved in the internal space of the outer casing, and an increase in temperature of the secondary battery can be remarkably suppressed.

Components in each embodiment described above and combinations thereof are one example, and additions, omissions, substitutions, and other modifications of the constitution are possible without departing from the spirit of the present invention.

### [Advantageous Effects of Invention]

According to the power generation device provided with the secondary battery related to the present invention, the constitution in which the insulating material is installed between the photoelectric conversion module and the secondary battery is adopted. Thereby, the radiant heat caused by the sunlight is obstructed by the insulating material, so that an increase in temperature of the secondary battery can be suppressed. Thereby, even when the power generation device is installed particularly under the hot summer sun, an effect that the secondary battery can maintain a sufficient cycle characteristic is produced.

According to the power generation device provided with the secondary battery related to the present invention, the constitution in which the heat reflector is disposed between the photoelectric conversion module and the secondary battery is adopted. Thereby, when the sunlight is applied to a light-receiving surface of the photoelectric conversion module, the radiant heat emitted from the photoelectric conversion module toward the secondary battery is reflected, so that an increase in temperature of the secondary battery can be remarkably suppressed. Thereby, even when the power generation device is installed particularly under the hot summer sun, an effect that the secondary battery can maintain a sufficient cycle characteristic is produced.

Further, according to the power generation device provided with the secondary battery related to the present invention, when the power generation device is installed at a low temperature, a degree of heat insulation is adjusted. Thereby, the temperature of the secondary battery can be hardly reduced.

### [Brief Description of Drawings]

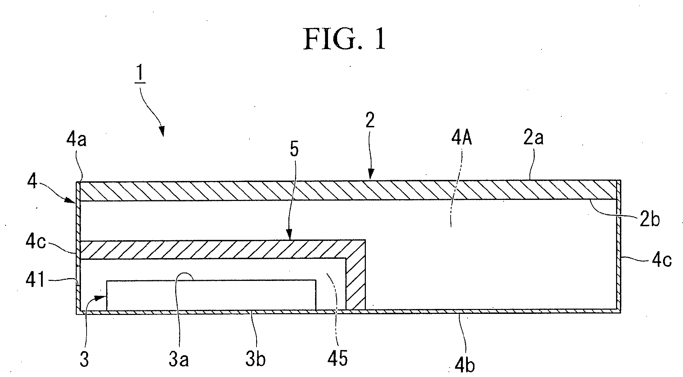

Fig. 1 is a view schematically showing a power generation device provided with a secondary battery which is an embodiment of the present invention, and is a cutaway view showing an example in which a low heat conducting material (an insulating material) is installed between a photoelectric conversion module and the secondary battery in an internal space of an outer casing.

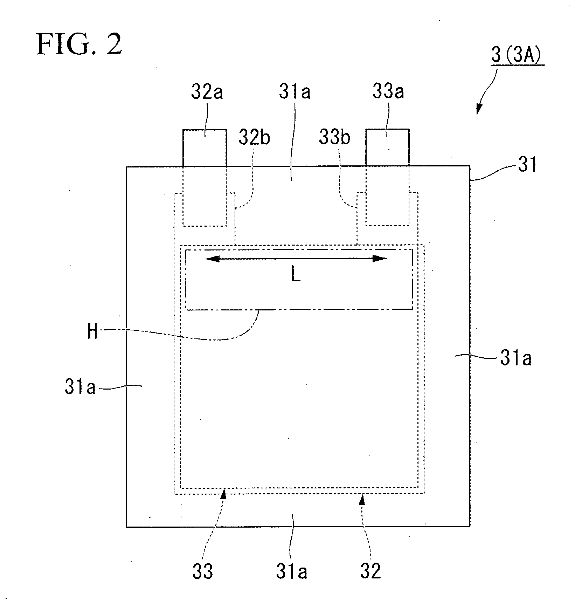

Fig. 2 is a view schematically showing the power generation device provided with the secondary battery which is the embodiment of the present invention, and is a top view showing an example of the secondary battery.

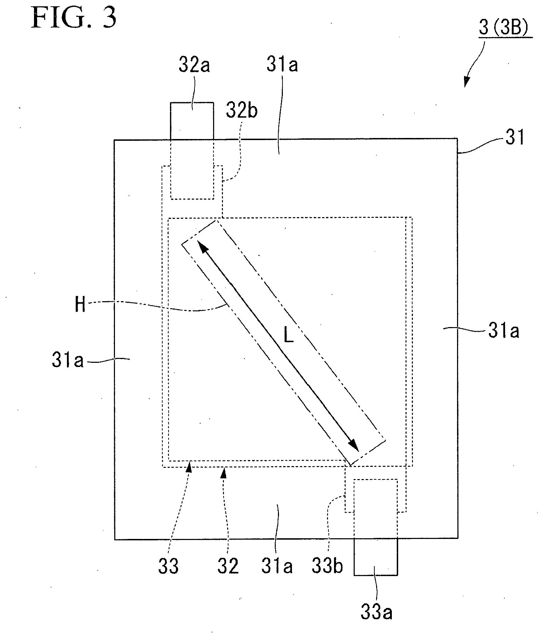

Fig. 3 is a view schematically showing the power generation device provided with the secondary battery which is the embodiment of the present invention, and is a top view showing another example of the secondary battery.

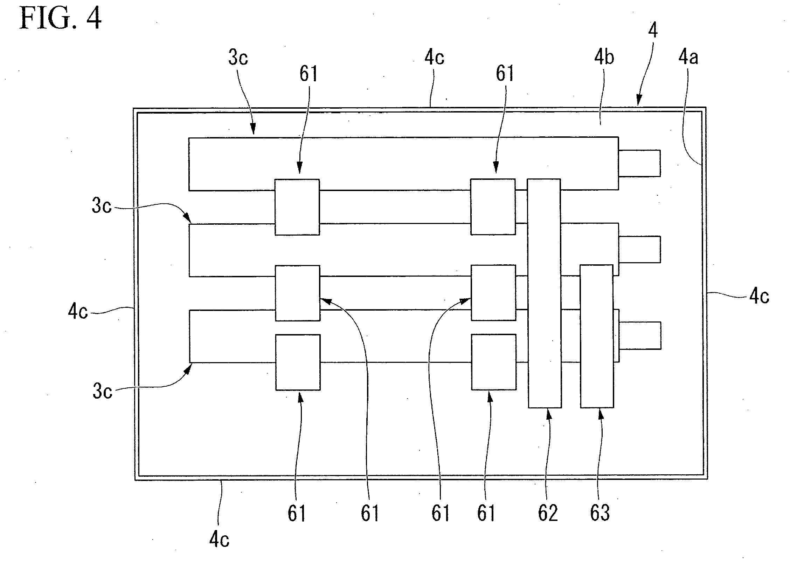

Fig. 4 is a view schematically showing the power generation device provided with the secondary battery which is the embodiment of the present invention, and is a top view showing an example in which heat-radiating members are disposed between a plurality of the secondary batteries and surfaces of the secondary batteries.

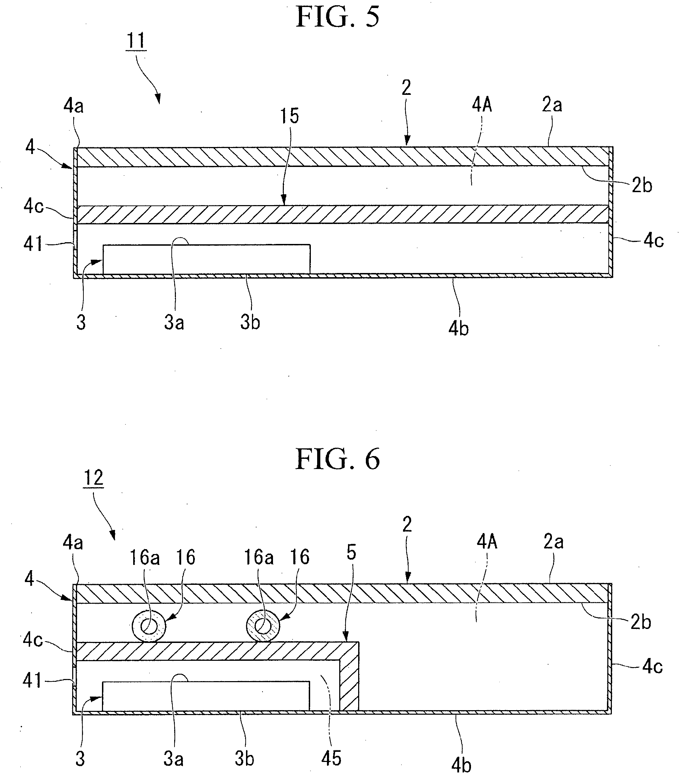

Fig. 5 is a view schematically showing the power generation device provided with the secondary battery which is the embodiment of the present invention, and a cutaway view showing another example in which the low heat conducting material is installed between the photoelectric conversion module and the secondary battery in the internal space of the outer casing.
Fig. 6 is a view schematically showing the power generation device provided with the secondary battery which is the embodiment of the present invention, and a cutaway view showing an example in which the low heat conducting material is installed between the photoelectric conversion module and the secondary battery in the internal space of the outer casing and pipe-like heat-radiating members are further installed on the low heat conducting material.

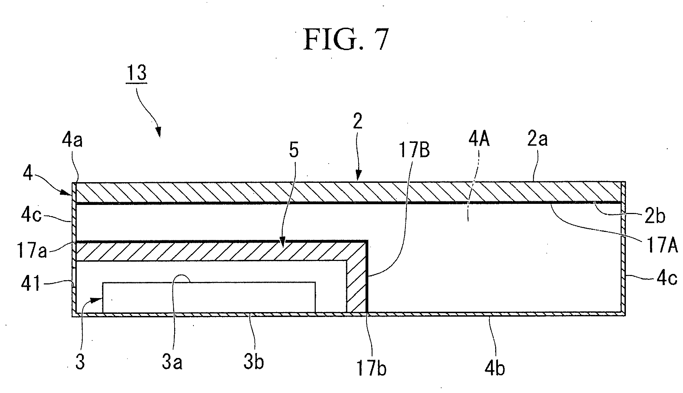

Fig. 7 is a view schematically showing the power generation device provided with the secondary battery which is the embodiment of the present invention, and a cutaway view showing an example in which the low heat conducting material is installed between the photoelectric conversion module and the secondary battery in the internal space of the outer casing and a heat-radiating member is further installed at a lower surface side of the photoelectric conversion module and a surface of the low heat conducting material.

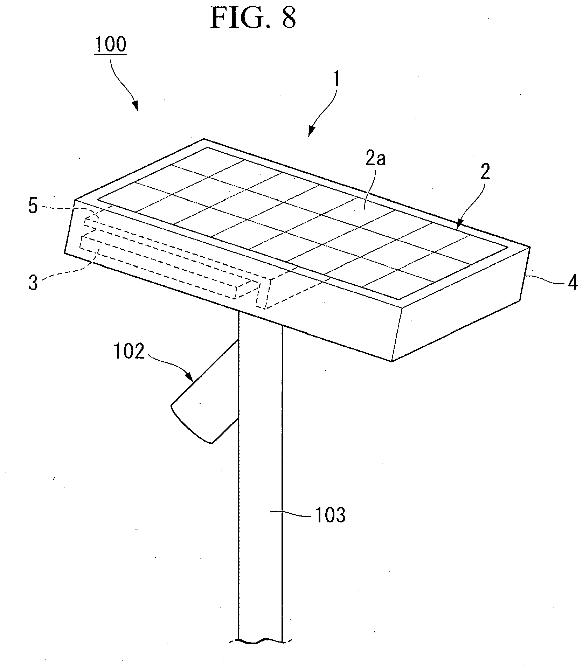

Fig. 8 is a schematic view showing a case in which the power generation device provided with the secondary battery which is the embodiment of the present invention is applied to a power source of a street lamp.

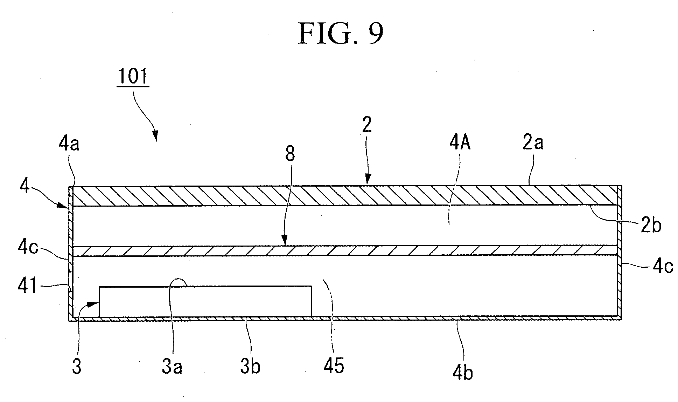

Fig. 9 is a view schematically showing the power generation device provided with the secondary battery which is the embodiment of the present invention, and a cutaway view showing an example in which a heat reflector (an insulating material) is installed between the photoelectric conversion module and the secondary battery in the internal space of the outer casing.

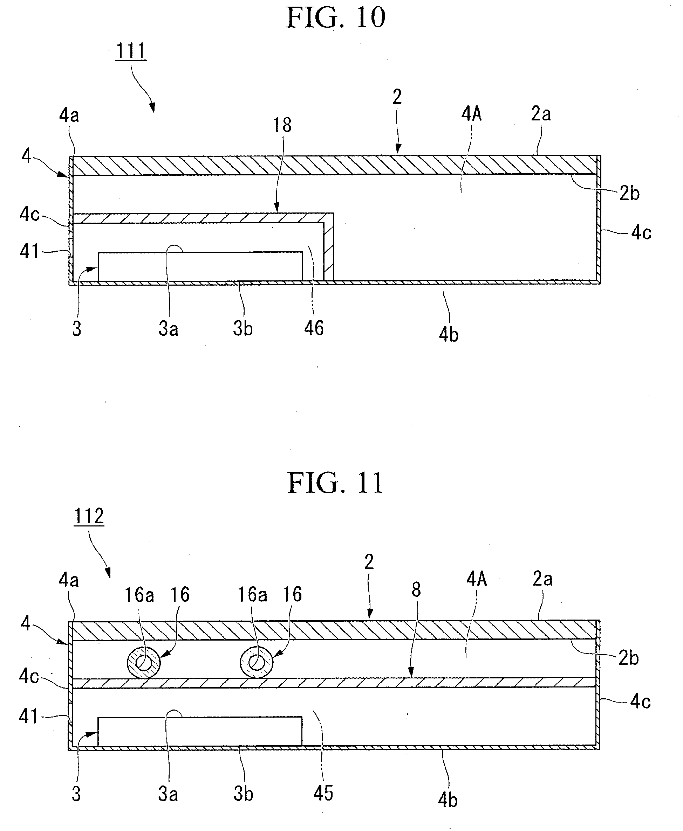

Fig. 10 is a view schematically showing the power generation device provided with the secondary battery which is the embodiment of the present invention, and a cutaway view showing another example in which the heat reflector is installed between the photoelectric conversion module and the secondary battery in the internal space of the outer casing.
Fig. 11 is a view schematically showing the power generation device provided with the secondary battery which is the embodiment of the present invention, and a cutaway view showing an example in which the heat reflector is installed between the photoelectric conversion module and the secondary battery in the internal space of the outer casing and pipe-like heat-radiating members are further installed on the heat reflector.

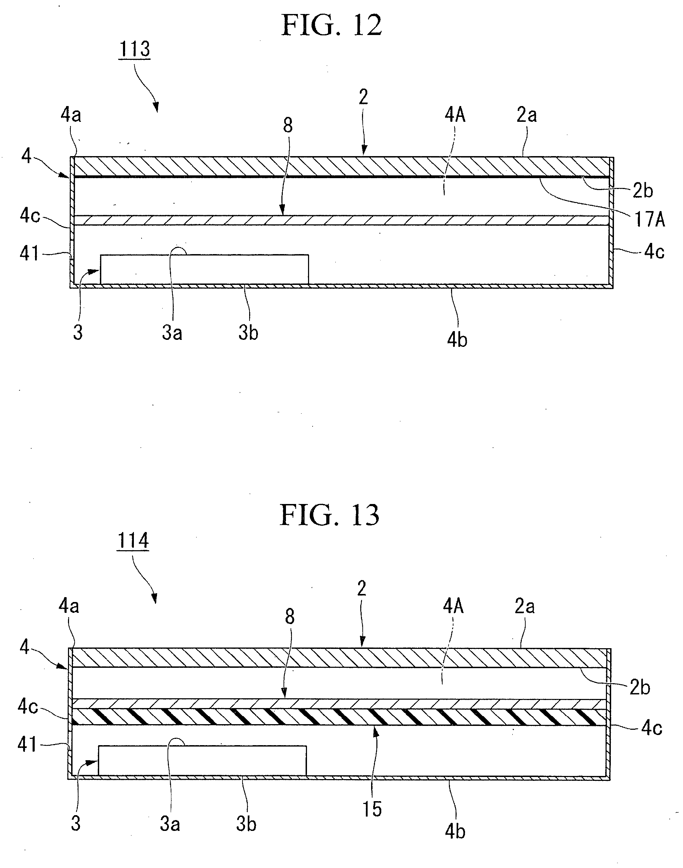

Fig. 12 is a view schematically showing the power generation device provided with the secondary battery which is the embodiment of the present invention, and a cutaway view showing an example in which the heat reflector is installed between the photoelectric conversion module and the secondary battery in the internal space of the outer casing and a heat-radiating member is further installed on a lower surface side of the photoelectric conversion module.
Fig. 13 is a view schematically showing the power generation device provided with the secondary battery which is the embodiment of the present invention, and a cutaway view showing an example in which the insulating materials on which the heat reflector and the low heat conducting material are laminated are disposed between the photoelectric conversion module and the secondary battery in the internal space of the outer casing.

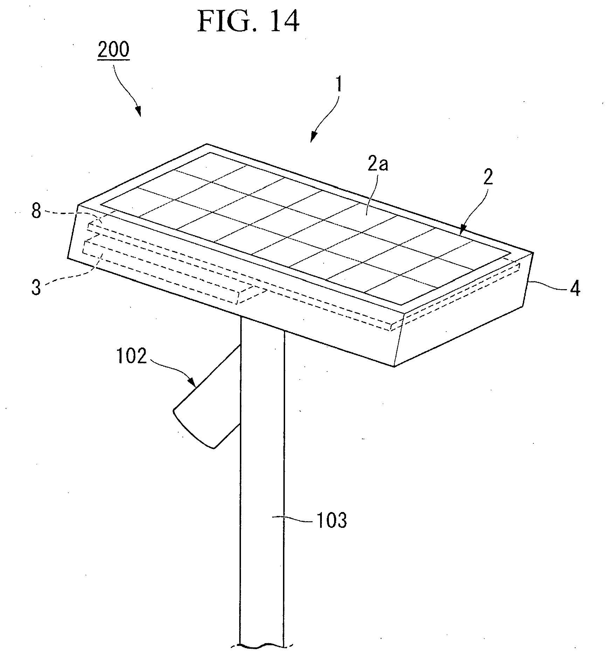

Fig. 14 is a schematic view showing the case in which the power generation device provided with the secondary battery which is the embodiment of the present invention is applied to the power source of the street lamp.

### [Description of Embodiments]

Hereinafter, a constitution of an embodiment of a power generation device provided with a secondary battery (hereinafter referred to simply as "power generation device") according to the present invention will be described with appropriate reference to Figs. 1 to 14. To facilitate understanding of characteristics of the drawings used in the description below, for the sake of convenience, the drawings may be shown with characteristic portions enlarged. Dimensional ratios, or the like of constituent elements may be different from an actual state, and the constituent elements may be shown with portions intended for electrical connection omitted.

### <First embodiment>

A power generation device 1 that is a first embodiment of the present invention will be described mainly with reference to Figs. 1 to 3 (an example in which the power generation device 1 shown in Fig. 8 is applied to a street lamp 100 will be referred to in part). Here, Fig. 1 is a cutaway view showing a constitution in which an insulating material 5 is installed between a photoelectric conversion module 2 and a secondary battery 3, and Figs. 2 and 3 are top views showing an example of the secondary battery.

The power generation device 1 of the present embodiment is, for instance, a device that can be used for driving a lighting device, an electric display device, etc. installed outdoors, such as the street lamp 100 shown in Fig. 8. In the street lamp 100 of the example shown in Fig. 8, the power generation device 1 is mounted on an upper end of an installation pole 103 such that a light-receiving surface 2a of the photoelectric conversion module 2 provided at one surface side thereof is directed approximately upward, and thus is installed such that sunlight is incident on the photoelectric conversion module 2. The street lamp 100 is provided with a lamp 102 that receives supply of electric power from the power generation device 1. This lamp 102 is mounted on the installation pole 103 at a position under the power generation device 1.

As shown in Fig. 1, the power generation device 1 of the present embodiment is provided with the photoelectric conversion module 2, the secondary battery 3 that is electrically connected with this photoelectric conversion module 2, and an outer casing 4 in which the photoelectric conversion module 2 and the secondary battery 3 are installed, and is schematically configured with a low heat conducting material (an insulating material) 5 installed on at least a part of the space between the photoelectric conversion module 2 and the secondary battery 3 to be interposed between the photoelectric conversion module 2 and the secondary battery 3.

Hereinafter, each component of the power generation device 1 of the present embodiment will be described in detail.

As the photoelectric conversion module 2, a flat panel-like module in which electric power can be produced by exposure to light, such as a conventional known solar cell, can be adopted with no restriction.

As the secondary battery 3, a battery having excellent rechargeability and dischargeability, such as a lithium ion secondary battery made up of rechargeable/dischargeable cells used for a long time, can be adopted with no restriction. Such lithium ion secondary batteries include, for instance, a battery in which a secondary battery laminate (not shown) is housed inside a package 31 formed of a laminate resin film having flexibility as shown in Figs. 2 and 3 and is sealed by four side sealing parts 31 a. As the secondary battery used in the present embodiment, a battery such as secondary batteries 3A and 3B shown in Figs. 2 and 3 provided with a positive electrode terminal 32a connected to a positive electrode collector 32 and a negative electrode terminal 33a connected to a negative electrode collector 33 can be used.

The outer casing 4 serves as a casing of the power generation device 1 of the present embodiment, and is a box-like member made up of a bottom plate 4b and lateral plates 4c, and an upper portion thereof serves as an opening 4a. The outer casing 4 may be formed of, for instance, a metal material having excellent heat resistance. In the example shown in Fig. 1, although details will be described, openings 41 for introducing external air into an internal space 4A (a space 45) mainly for the purpose of radiation of heat from the secondary battery 3 are formed at a plurality of positions of the outer casing 4.

As described above, the low heat conducting material 5 is disposed inside the outer casing 4, and is made of a combination of plate-like members. For this reason, in the example shown in Fig. 1, the low heat conducting material 5 is formed in an approximately L-shaped cross section, and forms the space 45 of an approximate cuboid shape between the bottom plate 4b and the lateral plates 4c of the outer casing 4. The low heat conducting material 5 provided for the power generation device 1 of the present embodiment particularly obstructs radiant heat caused by sunlight applied to the photoelectric conversion module 2, and prevents this radiant heat from reaching the secondary battery 3.

Here, the "heat insulating" described in the present invention means that heat migration (heat transfer) resulting from conduction, convection or radiation is prevented by physical or chemical properties. The "low heat conducting material" is a member in which an insulating material that enables an action of inhibiting heat migration resulting from, particularly, conduction is used.

Thermal conductivity of the low heat conducting material is not particularly restricted as long as the above object is achieved, and is preferably equal to or less than 0.05 W/(m·K) from the viewpoint of obtaining a high heat insulating effect, more preferably 0.03 W/(m·K), and most preferably 0.02 W/(m·K). From the viewpoint of availability, cost, etc. of the material, a low heat conducting material whose heat conductivity is not too low is preferably used.

That is, as the material used for the low heat conducting material 5, for example, in addition to the resin film or paper, a low heat conducting material including an air layer, namely, a foam material such as an acrylic resin, an ethylene resin, a propylene resin, a urethane resin, a silicone resin, a rubber resin, or the like may be used with no restriction. Further, as the material of the low heat conducting material 5, an air-layer-containing porous material using a metal material with high thermal conductivity, for instance, a material made up of a metal porous membrane (a structure in which air of a porous portion does not travel) or a honeycomb structure is preferable because heat radiation and insulation characteristics are made compatible.

In the power generation device 1 of the present embodiment, as shown in Fig. 1, the photoelectric conversion module 2 is installed to cover the upper surface opening 4a of the outer casing 4 and such that the light-receiving surface 2a is directed upward while exposed to the outside. The secondary battery 3 is installed in the internal space 4A of the outer casing 4. In the shown example, the secondary battery 3 is installed on the bottom plate 4b of the outer casing 4 in the space 45 formed in an approximate cuboid shape by the low heat conducting material 5 and the outer casing 4. The secondary battery 3 of the shown example is disposed inside the space 45 to be separated from the lateral plates 4c of the outer casing 4 and the low heat conducting material 5.

In the power generation device 1 provided with the secondary battery of the present embodiment, like the aforementioned constitution, as the low heat conducting material 5 is installed between the photoelectric conversion module 2 and the secondary battery 3, the radiant heat generated when sunlight is incident on the light-receiving surface 2a of the photoelectric conversion module 2 is obstructed or attenuated by the low heat conducting material 5. Thereby, an increase in temperature of the secondary battery 3 due to the radiant heat can be prevented. Therefore, even when the power generation device is installed outdoors under the hot sun, a sufficient cycle characteristic can be maintained, and a service time of the battery is also improved. Moreover, an increase in temperature of the secondary battery 3 is suppressed, and thereby swelling of the battery caused by a reduction of the internal electrolyte can be prevented from occurring. Thus, the battery is also excellent in terms of safety.

In the present embodiment, the internal space 4A of the outer casing 4 is divided by the low heat conducting material 5, and thereby a plurality of chambers are formed. The secondary battery 3 is preferably installed in at least one of the plurality of chambers. As shown in Fig. 1, a part of the internal space 4A of the outer casing 4 is partitioned using the low heat conducting material 5, thereby forming the space 45. The secondary battery 3 is preferably installed in the space 45 covered with this low heat conducting material 5. In the example shown in Fig. 1, the internal space 4A is divided into two spaces, i.e. the space 45 covered with the low heat conducting material 5 and a space other than this space 45. In this way, the secondary battery 3 is installed in at least one of the plurality of chambers formed by the low heat conducting material 5. Thereby, since the heat caused by the sunlight is obstructed, an increase in temperature of the secondary battery 3 can be suppressed.

In the installation of the low heat conducting material 5, as shown in Fig. 1, gaps, each of which serves as an air layer, are preferably provided between the photoelectric conversion module 2 and the low heat conducting material 5 and between the low heat conducting material 5 and the secondary battery 3. In this way, the air layer is secured between the members, thereby making it possible to obstruct the radiant heat associated with the application of the sunlight.

Here, as shown in Fig. 1, the secondary battery 3 is preferably disposed at a lower portion of the internal space 4A of the outer casing 4, namely in the vicinity of the bottom plate 4b. Thereby, the photoelectric conversion module 2, the gap (the air layer), the insulating material 5, the gap (the air layer), and the secondary battery 3 are disposed from the position of the upper surface opening 4a of the outer casing 4 toward the bottom plate 4b side in that order, and thereby the power generation device 1 can effectively obstruct the radiant heat transmitted from the photoelectric conversion module 2 side. Accordingly, in comparison with, for instance, the case in which the secondary battery 3 is disposed at the upper portion of the internal space 4A of the outer casing 4, an increase in temperature of the secondary battery 3 can be more effectively suppressed.

In the present embodiment, the heat-radiating opening 41 is preferably formed in at least one place at any position of the outer casing 4. In the example shown in Fig. 1, the opening 41 is provided in one place at a position at which the space 45 covered with the low heat conducting material 5 and the outside communicate with each other on the lateral plates 4c of the outer casing 4. In this way, the heat-radiating opening 41 introducing the external air is provided in the outer casing 4, and thereby an increase in temperature of the secondary battery 3 can be further suppressed.

A shape of the opening 41 formed in the outer casing 4 is not particularly restricted. For example, the opening 41 may be formed as a honeycomb structure made up of a plurality of hole portions. In this case, the opening 41 preferably has a structure in which a large number of small hole portions are formed rather than a structure in which a small number of large hole portions are formed, because air exhaust efficiency and heat discharge efficiency are enhanced, and an excellent heat-radiating characteristic is obtained.

In the example shown in Fig. 1, the example in which the secondary battery 3 is installed in the space 45 completely surrounded by the outer casing 4 and the low heat conducting material 5 has been described, but the invention is not limited thereto. For example, the low heat conducting material 5 may be provided between the photoelectric conversion module 2 and the secondary battery 3, namely to cover only an upper surface 3 a side of the secondary battery 3. Even in this case, an effect of sufficiently obstructing the radiant heat is obtained due to the low heat conducting material 5.

In the present embodiment, for instance, a constitution in which, because a high heat-radiating characteristic can be given to the secondary battery 3 itself shown in Fig. 1, a heat-radiating member (not shown) is disposed to be contact with the secondary battery 3 and the outer casing 4 to transmit the heat of the secondary battery 3 to the outer casing 4 may be adopted. Like the example shown in Fig. 1, it is preferable for the secondary battery 3 to be directly fixed to the outer casing 4 from the viewpoint of heat-radiating efficiency because the outer casing 4 itself functions as the heat-radiating member.

In the present embodiment, for instance, a constitution in which, to further enhance a heat radiation effect of the secondary battery 3, embossing (not shown) is provided at a side of the secondary battery 3 which is opposite to a lower surface 3b side of the photoelectric conversion module 2 may be adopted. In this way, the lower surface 3b side of the secondary battery 3 is subjected to embossing or adhesion of an embossed sheet, and thereby the heat of the secondary battery 3 can be discharged from the lower surface 3b toward the outer casing 4.

### <Second embodiment>

A power generation device 11 provided with a secondary battery which is a second embodiment of the present invention will be described mainly with reference to Fig. 5. Fig. 5 is a cutaway view showing a power generation device 11 of the present embodiment. In the present embodiment, components that are the same as those of the power generation device 1 of the first embodiment described above will be described with the same reference signs, and a detailed description thereof will be omitted.

As shown in Fig. 5, the power generation device 11 of the present embodiment is different from the power generation device 1 of the first embodiment only in that, in place of the low heat conducting material 5 shown in Fig. 1 in an approximately L-shaped cross section, a flat panel-like low heat conducting material 15 is disposed between a photoelectric conversion module 2 and a secondary battery 3 throughout an internal space 4A of an outer casing 4 in a planar direction.

Like the power generation device 1 of the first embodiment, as the power generation device 11 shown in Fig. 5 is provided with the low heat conducting material 15, radiant heat caused by sunlight is obstructed by the low heat conducting material 15, and an increase in temperature of the secondary battery 3 can be suppressed. Therefore, even when the power generation device is installed outdoors under the hot sun, a sufficient cycle characteristic can be maintained. Since a service time of the battery can be improved, and swelling of the battery caused by a reduction of an internal electrolyte can be prevented from occurring, the battery is also excellent in terms of safety.

### <Third embodiment>

A power generation device 12 provided with a secondary battery which is a third embodiment of the present invention will be described mainly with reference to a cutaway view of Fig. 6. Likewise in the present embodiment, components that are the same as those of the power generation devices 1 and 11 of the first and second embodiments described above will be described with the same reference signs, and a detailed description thereof will be omitted.

As shown in Fig. 6, the power generation device 12 of the present embodiment is different only in that, with respect to the power generation device 1 of the first embodiment shown in Fig. 1, tubular members 16 are further provided on a low heat conducting material 5. In the example shown in Fig. 6, the two tubular members 16 are installed on the low heat conducting material 5, and openings 16a of opposite ends of the tubular members 16 are connected to openings (not shown) formed in lateral plates 4c of an outer casing 4. Thereby, an internal space of each of the tubular members 16 is configured to communicate with the outside.

As a material of each of the tubular members 16, a heat transferable material, for instance, a metal material such as iron, aluminum, or the like can be used. Since the tubular members 16 can perform heat radiation and cooling on the low heat conducting material 5 using external air introduced from the outside, radiant heat directed from the photoelectric conversion module 2 side to the secondary battery 3 side can be more effectively obstructed. Thereby, as described above, even when the power generation device is installed outdoors under the hot sun, an increase in temperature of the secondary battery 3 can be effectively prevented, and a sufficient cycle characteristic can be maintained. Since a service time of the battery can be improved, and swelling of the battery caused by a reduction of an internal electrolyte can be prevented from occurring, the battery is also excellent in terms of safety. Further, in the constitution provided with the tubular members 16, since the external air can be introduced with the internal space 4A of the outer casing 4 closed, the heat radiation and cooling can be performed without bringing dust or moisture contained in the external air into contact with the photoelectric conversion module 2 or the secondary battery 3.

In the present embodiment, as the tubular members 16 having the aforementioned constitution are provided, heat exchange can be performed between the external air circulating in the tubular members 16 and internal air of the internal space 4A. Thus, an increase in temperature of the secondary battery 3 can be further suppressed.

### <Fourth embodiment>

A power generation device 13 provided with a secondary battery which is a fourth embodiment of the present invention will be described mainly with reference to a cutaway view of Fig. 7. Likewise in the present embodiment, components that are the same as those of the power generation devices 1, 11, and 12 of the first, second, and third embodiments described above will be described with the same reference signs, and a detailed description thereof will be omitted.

As shown in Fig. 7, the power generation device 13 of the present embodiment is different only in that, with respect to the power generation device 1 of the first embodiment shown in Fig. 1, a heat-radiating member 17A further sticks to the entirety of a lower surface 2b of a photoelectric conversion module 2, and a heat-radiating member 17B further sticks to a surface side of the low heat conducting material 5 which is opposite to the side of a secondary battery 3. The heat-radiating member 17B provided on a surface of the low heat conducting material 5 is configured with ends 17a and 17b thereof in contact with an outer casing 4.

A material of each of the heat-radiating members 17A and 17B is not particularly restricted as long as it has a heat-radiating function. However, in addition to a graphite material or the like that has excellent heat-radiating characteristics, for instance, a sheet material of iron or aluminum may be used.

As the heat-radiating member 17A sticking to the photoelectric conversion module 2, a member in which a function of reflecting radiant heat is weaker is preferable because there is a low possibility of an increase in temperature of the photoelectric conversion module 2 due to reflective heat. As the heat-radiating member 17A, a member that is a shade of black that is weak in the function of reflecting the radiant heat is preferable as described above because there is a low possibility of an increase in temperature of the photoelectric conversion module 2.

According to the power generation device 13 shown in Fig. 7, as the heat-radiating members 17A and 17B are provided, the radiant heat caused by sunlight is obstructed by the low heat conducting material 5 and the heat-radiating members 17A and 17B, and an increase in temperature of the secondary battery 3 can be suppressed. Therefore, a sufficient cycle characteristic can be maintained. Since the service time of the battery can be improved, and swelling of the battery caused by a reduction of an internal electrolyte can be prevented from occurring, the battery is also excellent in terms of safety.

### <Fifth embodiment>

A power generation device 101 that is a fifth embodiment of the present invention will be described mainly with reference to Fig. 9 (an example shown in Fig. 14 in which the power generation device 101 is applied to a street lamp 200 will also be referred to in part). Here, Fig. 9 is a cutaway view showing a constitution in which a heat reflector 8 is disposed between a photoelectric conversion module 2 and a secondary battery 3.

Like the power generation device 101 of the first embodiment described above, the power generation device 101 of the present embodiment can be used, for instance, for driving a lighting device, an electric display device, etc. installed outdoors, such as the street lamp 200 shown in Fig. 14. In the street lamp 200 of the example shown in Fig. 14, the power generation device 101 is mounted on an upper end of an installation pole 103 such that a light-receiving surface 2a of the photoelectric conversion module 2 provided at one surface side thereof is directed approximately upward, and thereby is installed such that sunlight is incident on the photoelectric conversion module 2. The street lamp 200 is provided with a lamp 102 that receives supply of electric power from the power generation device 1. This lamp 102 is mounted on the installation pole 103 at a position under the power generation device 1.

As shown in Fig. 9, the power generation device 101 of the present embodiment is identical to the power generation devices of the first to fourth embodiments described above in that it is provided with the photoelectric conversion module 2, the secondary battery 3 that is electrically connected with the photoelectric conversion module 2, and an outer casing 4 in which the photoelectric conversion module 2 and the secondary battery 3 are installed. The power generation device 101 of the present embodiment is different from the power generation devices of the first to fourth embodiments in that the heat reflector 8 reflecting radiant heat emitted from the photoelectric conversion module 2 is disposed between the photoelectric conversion module 2 and the secondary battery 3.

Hereinafter, each component of the power generation device 101 of the present embodiment will be described. In the present embodiment, components that are the same as those of the power generation devices 1, 11, 12, and 13 of the first, second, third, and fourth embodiments will be described with the same reference signs, and a detailed description will be omitted.

As the photoelectric conversion module 2, the secondary battery 3, and the outer casing 4 provided for the power generation device 101 of the present embodiment, those having the same constitutions as the power generation devices 1, 11, 12, and 13 of the first to fourth embodiments may be adopted.

As described above, the heat reflector 8 is formed of a plate-like member disposed inside the outer casing 4. In the example shown in Fig. 9, the flat panel-like heat reflector 8 is disposed between the photoelectric conversion module 2 and the secondary battery 3 throughout the internal space 4A of the outer casing 4 in a planar direction to be interposed between the photoelectric conversion module 2 and the secondary battery 3. The heat reflector 8 forms a space 45 of an approximate cuboid shape between a bottom plate 4b and lateral plates 4c of the outer casing 4. The heat reflector 8 provided for the power generation device 101 of the present embodiment reflects radiant heat emitted from the photoelectric conversion module 2, particularly when sunlight is applied to the photoelectric conversion module 2, and thereby prevents the radiant heat from reaching the secondary battery 3.

Here, an "insulating material" is a material that can inhibit heat from being transmitted from a certain member to another member by heat transfer, radiant heat, or convection. "Heat reflection" described in the present invention means that heat migration resulting from radiation is heat-shielded (reflected) by physical or chemical properties. In addition, the "heat reflector" is a member for which a material enabling a heat shield (reflection) action is used, and such materials include a heat reflective material that can increase heat reflectivity of a surface of the member.

From the viewpoint of increasing a heat insulating effect, the reflectivity of the heat reflector is preferably not less than 50%, more preferably 90%, and most preferably 99%.

To be specific, the material used for the heat reflector 8 is not particularly restricted, but a material used for reflecting heat for a long time may be adopted with no restriction. Such heat reflective materials include, for instance, a silver plated part, a gold plated part, an aluminum plated part, an aluminum vapor-deposited part, or the like.

In the example shown in Fig. 9, the heat reflector 8 is formed throughout the internal space 4A of the outer casing 4 in the planar direction, but it is not limited thereto and may be formed only at a part in this planar direction. For example, the heat reflector 8 may be formed only on a region above the upper surface 3a of the secondary battery 3. Since the heat reflector 8 uses a heat-reflecting function of the material, the heat reflector 8 has only to reflect the radiant heat that is emitted from the photoelectric conversion module 2 and is directed toward the secondary battery 3 side. Even when the heat reflector 8 is provided only on the region above the upper surface 3a of the secondary battery 3, a sufficient heat-reflecting effect is obtained, and an increase in temperature of the secondary battery 3 can be effectively suppressed.

In the power generation device 101 of the present embodiment, as shown in Fig. 9, the photoelectric conversion module 2 is installed to cover an upper surface opening 4a of the outer casing 4 such that the light-receiving surface 2a is directed upward while exposed to the outside. The secondary battery 3 is installed in the internal space 4A of the outer casing 4 and, in the shown example, is installed on a bottom plate 4b of the outer casing 4 in the space 45 formed in an approximate cuboid shape by the heat reflector 8 and the outer casing 4. The secondary battery 3 of the shown example is disposed to be separated from the lateral plates 4c of the outer casing 4 and the heat reflector 8 in the space 45.

In the power generation device 101 provided with the secondary battery of the present embodiment, like the above constitution, the heat reflector 8 is disposed between the photoelectric conversion module 2 and the secondary battery 3, and thereby the radiant heat generated by the incidence of the sunlight on the light-receiving surface 2a of the photoelectric conversion module 2 and emitted from the photoelectric conversion module 2 toward the secondary battery 3 is reflected by the heat reflector 8. Thereby, since the radiant heat can be inhibited from being directed to the secondary battery 3 side, an increase in temperature of the secondary battery 3 can be prevented. Therefore, even when the power generation device is installed outdoors under the hot sun, a sufficient cycle characteristic can be maintained, and a service time of the battery is also improved. Moreover, an increase in temperature of the secondary battery 3 is suppressed, and thereby swelling of the battery caused by a reduction of the internal electrolyte can be prevented from occurring. Thus, the battery is also excellent in terms of safety.

The present embodiment may adopt a constitution in which the internal space 4A of the outer casing 4 is divided by the heat reflector 8, and thereby a plurality of chambers are formed, and in which the secondary battery 3 is installed in at least one of these plurality of chambers. In the example shown in Fig. 9, the internal space 4A is divided into two spaces, i.e. the lower space 45 partitioned by the heat reflector 8 and an upper space other than this space 45. On the other hand, as described above, since the heat reflector 8 uses the heat-reflecting function, the heat reflector 8 has only to be at least formed at a position above the secondary battery 3, and the internal space 4A of the outer casing 4 is not necessarily divided. However, when the constitution in which the secondary battery 3 is installed in one of the plurality of chambers divided by the heat reflector 8 is adopted, the radiant heat directed to the secondary battery 3 is reliably obstructed. Thus, an increase in temperature of the secondary battery 3 can be suppressed.

In the installation of the heat reflector 8, as shown in Fig. 9, gaps, each of which serves as an air layer, are preferably provided between the photoelectric conversion module 2 and the heat reflector 8 and between the heat reflector 8 and the secondary battery 3. In this way, the air layer is secured between the members, thereby making it possible to effectively reflect and obstruct the radiant heat directed to the secondary battery 3 side in association with the application of sunlight.

Here, as described above, since the heat reflector 8 uses the heat-reflecting function, an increase in temperature of the secondary battery 3 installed at a lower portion of the internal space 4A of the outer casing 4 is suppressed, whereas the radiant heat reflected by the heat reflector 8 returns to the photoelectric conversion module 2, and there is concern of an increase in temperature occurring at this photoelectric conversion module 2. In this way, when a sharp rise in temperature occurs at the photoelectric conversion module 2, an influence may be produced on a power generating characteristic. To suppress this occurrence of the heat returning to the photoelectric conversion module 2 due to the heat reflection, as described above, the air layer is preferably secured between the photoelectric conversion module 2 and the heat reflector 8.

Similarly to the power generation device 1 of the first embodiment described above or the like, as shown in Fig. 9, the secondary battery 3 is preferably disposed at the lower portion of the internal space 4A of the outer casing 4, i.e., in the vicinity of the bottom plate 4b. Thereby, the photoelectric conversion module 2, the gap (the air layer), the heat reflector 8, the gap (the air layer), and the secondary battery 3 are disposed from the position of the upper surface opening 4a of the outer casing 4 toward the bottom plate 4b side in that order, and thereby the power generation device 101 can obstruct the radiant heat directed from the photoelectric conversion module 2 side to the secondary battery 3 side. Accordingly, in comparison with, for instance, the case in which the secondary battery 3 is disposed at the upper portion of the internal space 4A of the outer casing 4, an increase in temperature of the secondary battery 3 can be more effectively suppressed.

In the present embodiment, similarly to the power generation device 1 of the first embodiment or the like, the heat-radiating opening 41 is preferably formed in at least one place at any position of the outer casing 4. In the example shown in Fig. 9, the opening 41 is provided in one place at a position at which the space 45 partitioned by the heat reflector 8 communicates with the outside on the lateral plates 4c of the outer casing 4. In this way, the heat-radiating opening 41 introducing the external air is provided in the outer casing 4, and thereby an increase in temperature of the secondary battery 3 can be more effectively suppressed.

A shape of the opening 41 formed in the outer casing 4 is not particularly restricted. Similarly to the case of the first embodiment or the like, the opening 41 may be formed, for instance, as a honeycomb structure made up of a plurality of hole portions. In this case, the opening 41 preferably has a structure in which a large number of small hole portions are formed rather than a structure in which a small number of large hole portions are formed, because air exhaust efficiency and heat discharge efficiency are enhanced, and an excellent heat-radiating characteristic is obtained.

In the present embodiment, similarly to the case of the first embodiment or the like, for instance, a constitution in which, since a high heat-radiating characteristic can be given to the secondary battery 3 itself shown in Fig. 9, the heat-radiating member (not shown) is disposed in contact with the secondary battery 3 and the outer casing 4, and in which the heat of the secondary battery 3 is transmitted to the outer casing 4 may be adopted. As the example shown in Fig. 9, when the secondary battery 3 is directly fixed to the outer casing 4, this is preferable from the viewpoint of the heat-radiating efficiency because the outer casing 4 itself functions as the heat-radiating member.

In the present embodiment, similarly to the case of the first embodiment or the like, for instance, a constitution in which, to further improve the heat-radiating effect of the secondary battery 3, embossing (not shown) is provided at a side of the secondary battery 3 which is opposite to a lower surface 3b side of the photoelectric conversion module 2 may be adopted. In this way, the lower surface 3b side of the secondary battery 3 is subjected to embossing or adhesion of an embossed sheet, and thereby the heat of the secondary battery 3 can be discharged from the lower surface 3b toward the outer casing 4.

### <Sixth embodiment>

A power generation device 111 provided with a secondary battery which is a sixth embodiment of the present invention will be described mainly with reference to Fig. 10. Fig. 10 is a cutaway view showing the power generation device 111 of the present embodiment. In the present embodiment, components that are the same as those of the power generation device 101 of the fifth embodiment described above will be described with the same reference signs, and a detailed description thereof will be omitted.

As shown in Fig. 10, the power generation device 111 of the present embodiment is different from the power generation device 101 of the fifth embodiment in that, in place of the flat panel-like heat reflector 8 shown in Fig. 9, a heat reflector 18 that is formed in an approximately L-shaped cross section and forms a space 46 of an approximate cuboid shape between a bottom plate 4b and lateral plates 4c of an outer casing 4 is provided.

According to the power generation device 111 shown in Fig. 10, the heat reflector 18 is provided, an internal space 4A of the outer casing 4 is divided by the heat reflector 18, and thereby the space 46 is formed and a secondary battery 3 is installed in this space 46. Thereby, similarly to the power generation device 101 of the fifth embodiment, radiant heat emitted from a photoelectric conversion module 2 and directed to the secondary battery 3 side can be effectively reflected and obstructed by the heat reflector 18. Thus, since an increase in temperature of the secondary battery 3 can be suppressed, a sufficient cycle characteristic can be maintained even when the power generation device is installed outdoors under the hot sun. Since a service time of the battery is improved, and swelling of the battery caused by a reduction of an internal electrolyte can be prevented from occurring, the battery is also excellent in terms of safety.

### <Seventh embodiment>

A power generation device 112 provided with a secondary battery which is a seventh embodiment of the present invention will be described mainly with reference to a cutaway view of Fig. 11. Likewise in the present embodiment, components that are the same as those of the power generation devices 101 and 111 of the fifth and sixth embodiments described above will be described with the same reference signs, and a detailed description thereof will be omitted.

As shown in Fig. 11, the power generation device 112 of the present embodiment is different only in that, with respect to the power generation device 101 of the fifth embodiment shown in Fig. 9, tubular members 16 are further provided on a heat reflector 8. In the example shown in Fig. 11, the two tubular members 16 are installed on the heat reflector 8, and openings 16a of opposite ends of the tubular members 16 are connected to openings (not shown) formed in lateral plates 4c of an outer casing 4. Thereby, an internal space of each of the tubular members 16 is configured to communicate with the outside.

The tubular members 16 are identical to the tubular members 16 provided for the power generation device 12 of the third embodiment shown in Fig. 6, and are made of the same materials in the same shapes as the tubular members 16 provided for the power generation device 12. Since the tubular members 16 can perform heat radiation and cooling on the heat reflector 8 using external air introduced from the outside, radiant heat directed from the photoelectric conversion module 2 side to the secondary battery 3 side can be more effectively obstructed in cooperation with a reflecting action of the radiant heat caused by the heat reflector 8. Thereby, as described above, even when the power generation device is installed outdoors under the hot sun, an increase in temperature of the secondary battery 3 can be effectively prevented, and a sufficient cycle characteristic can be maintained. Since a service time of the battery can be improved, and swelling of the battery caused by a reduction of an internal electrolyte can be prevented from occurring, the battery is also excellent in terms of safety. Further, in the constitution provided with the tubular members 16, since the external air can be introduced with the internal space 4A of the outer casing 4 and the external air obstructed, effective heat radiation and cooling can be performed without bringing dust or moisture contained in the external air into contact with the photoelectric conversion module 2 or the secondary battery 3:
In the present embodiment, as the tubular members 16 having the aforementioned constitution are provided, heat exchange can be performed between the external air circulating in the tubular members 16 and internal air of the internal space 4A as described above. For this reason, an increase in temperature of the secondary battery 3 can be more effectively suppressed.

### <Eighth embodiment>

A power generation device 113 provided with a secondary battery which is an eighth embodiment of the present invention will be described mainly with reference to a cutaway view of Fig. 12. Likewise in the present embodiment, components that are the same as those of the power generation devices 101, 111, and 112 of the fifth, sixth, and seventh embodiments described above will be described with the same reference signs, and a detailed description thereof will be omitted.

As shown in Fig. 12, the power generation device 113 of the present embodiment is different in that, with respect to the power generation device 101 of the fifth embodiment shown in Fig. 9, a heat-radiating member 17A is further adhered to the entirety of a lower surface 2b of a photoelectric conversion module 2.

The heat-radiating member 17A is identical to the heat-radiating member 17A provided for the power generation device 13 of the fourth embodiment shown in Fig. 7, and is made of the same material in the same shape as the heat-radiating member 17A provided for the power generation device 13.

A method of adhering the heat-radiating member 17A to the lower surface 2b of the photoelectric conversion module 2 is not particularly restricted, and a conventional known method using an adhesive may be adopted with no restriction.

As the heat-radiating member 17A, a member in which a function of reflecting radiant heat is weaker is preferable because there is a low possibility of an increase in temperature of the photoelectric conversion module 2 due to reflective heat. As the heat-radiating member 17A, a member that is a shade of black that is weak in the function of reflecting the radiant heat is preferable as described above because there is a low possibility of an increase in temperature of the photoelectric conversion module 2.

According to the power generation device 113 shown in Fig. 12, as the heat-radiating member 17A is provided, the radiant heat emitted from the conversion module 2 and directed to a secondary battery 3 side is obstructed and attenuated by the heat-radiating member 17A first, and then the radiant heat directed to the secondary battery 3 side is further reflected by the heat reflector 8, so that an increase in temperature of the secondary battery 3 can be effectively suppressed. Therefore, a sufficient cycle characteristic can be maintained. Since a service time of the battery can be improved, and swelling of the battery caused by a reduction of an internal electrolyte can be prevented from occurring, the battery is also excellent in terms of safety.

Further, according to the power generation device 113 of the present embodiment, the heat-radiating member 17A is adhered to the lower surface 2b side of the photoelectric conversion module 2. Thereby, for example, when the radiant heat emitted from the photoelectric conversion module 2 is reflected by the heat reflector 8, this reflective heat can be prevented from flowing into the photoelectric conversion module 2 again. Thereby, the photoelectric conversion module 2 is not exposed to excessive heat, and gradation thereof can be prevented.

### <Ninth embodiment>

A power generation device 114 provided with a secondary battery which is a ninth embodiment of the present invention will be described mainly with reference to a cutaway view of Fig. 13. Likewise in the present embodiment, components that are the same as those of the power generation devices 101, 111, 112, and 113 of the fifth, sixth, seventh, and eighth embodiments described above will be described with the same reference signs, and a detailed description thereof will be omitted.

As shown in Fig. 13, the power generation device 114 of the present embodiment is different in that, with respect to the power generation device 101 of the fifth embodiment shown in Fig. 9, a low heat conducting material 15 is further installed on at least a part of the space between the photoelectric conversion module 2 and the secondary battery 3, and a heat reflector 8 disposed between the photoelectric conversion module 2 and the secondary battery 3 is adhered to the heat conducting material 15. In the example shown, the heat reflector 8 is adhered to a side opposite to the secondary battery 3 side of the low heat conducting material 15.

The low heat conducting material 15 is a flat panel-like member disposed inside an outer casing 4, and is made of the same material in the same shape as the low heat conducting material 15 provided for the power generation device 11 of the second embodiment shown in Fig. 5 because it is identical to the low heat conducting material 15 provided for the power generation device 11.

In the example shown in Fig. 13, the low heat conducting material 15 is disposed throughout an internal space 4A of the outer casing 4 in a planar direction between the photoelectric conversion module 2 and the secondary battery 3. As this low heat conducting material 15 is provided, radiant heat caused by sunlight applied to the photoelectric conversion module 2 is obstructed, and this radiant heat can be prevented from reaching the secondary battery 3. That is, in the power generation device 14 of the present embodiment, the radiant heat directed from the photoelectric conversion module 2 toward the secondary battery 3 is reflected by the heat reflector 8 again. At this point, secondary radiant heat may be emitted from the heat reflector 8, but this secondary radiant heat is obstructed by the low heat conducting material 15. Thus, the radiant heat directed to the secondary battery 3 can be suppressed.

As the method of adhering the heat reflector 8 to the low heat conducting material 15, a conventional known method, for instance, using the adhesive may be adopted with no restriction.

According to the power generation device 114 shown in Fig. 13, the constitution in which the low heat conducting material 15 is further provided, and the heat reflector 8 is laminated on this low heat conducting material 15 is adopted. Thereby, the radiant heat emitted from the photoelectric conversion module 2 toward the secondary battery 3 is reflected, and the secondary radiant heat generated at this point is obstructed, so that an increase in temperature of the secondary battery 3 can be effectively suppressed. Similarly to the case of each of the aforementioned embodiments, a sufficient cycle characteristic can be maintained. Since a service time of the battery can be improved, and swelling of the battery caused by a reduction of an internal electrolyte can be prevented from occurring, the battery is also excellent in terms of safety.

In the present embodiment, the low heat conducting material 15 is disposed at the secondary battery 3 side, and the heat reflector 8 is disposed at the photoelectric conversion module 2 side. However, this is preferable because the secondary radiant heat, as described above, generated when the radiant heat emitted from the photoelectric conversion module 2 is reflected by the radiant heat can be effectively obstructed by the low heat conducting material 15, and is prevented from being directed to the secondary battery 3 side.

In the present embodiment, even when a predetermined gap is provided between the low heat conducting material 15 and the heat reflector 8, the effect of reflecting and obstructing the radiant heat as described above is sufficiently obtained.

### <Other modifications>

Other modifications of the present invention will be described below. In the following description, a detailed description of components that are the same as those of the power generation devices 1, 11, 12, 13, 101, 111, 112, 113, and 114 of the respective embodiments described above will be omitted.

As the secondary battery 3 used in the power generation device, for example, any of a battery in which, as in the secondary battery 3A shown in Fig. 2, both a positive electrode terminal 32a and a negative electrode terminal 33a are provided to protrude from the same sides of the secondary battery 3 having a rectangular shape in a top view, and a battery in which, as in the secondary battery 3B shown in Fig. 3, a positive electrode terminal 32a and a negative electrode terminal 33a are provided to protrude from sides opposite to each other may be adopted. In the secondary batteries 3A and 3B shown in Figs. 2 and 3, the positive electrode terminal 32a is connected to a connecting part 32b formed to protrude from a positive electrode collector 32, and the negative electrode terminal 33a is connected to a connecting part 33b formed to protrude from a negative electrode collector 33.

Although not shown in detail, in forming the heat-radiating opening 41 of the outer casing 4 as shown in Fig. 1 or the like, the opening 41 is more preferably disposed to cause the external air to linearly flow in toward a heat source region H including a region connecting the connecting part 32b between the positive electrode terminal 32a and the positive electrode collector 32 and the connecting part 33b between the negative electrode terminal 33a and the negative electrode collector 33 as shown in Figs. 2 and 3 at a shortest distance L. As the opening formed in the outer casing 4 is disposed as described above, a position of the heat source region H from which the secondary battery 3 best generates heat can be cooled by introducing the external air. Thus, an increase in temperature of the secondary battery 3 can be more effectively suppressed. Further, the opening 41 has only to be provided in at least one place at any position of the outer casing 4. However, it is preferable to provide the opening 41 in a plurality of places because a cooling effect associated with the introduction of the external air in the internal space 4A is improved.

In the power generation devices 1, 11, 12, 13, 101, 111, 112, 113, and 114 of the respective embodiments, as in the example shown in the top view of Fig. 4, a constitution in which a plurality of secondary batteries are provided may be adopted. In the shown example, three long plate-like secondary batteries 3C are arranged on the bottom plate 4b of the outer casing 4 approximately in parallel in a top view. In this way, the plurality of secondary batteries 3C are configured to be disposed with gaps therebetween. Thereby, in comparison with the case in which the single secondary battery is installed, a heat-radiating effect is further improved due to heat discharge caused by the gaps.

In the example shown in Fig. 4, heat-radiating members 61 having an approximate cuboid shape are disposed two by two between the secondary batteries 3C and along one long side of the secondary battery 3C disposed at the outermost side. In this way, when the plurality of secondary batteries 3C are used in parallel, the heat-radiating members 61 are preferably disposed between the secondary batteries 3C from the viewpoint of the fact that an increase in temperature of each of the secondary batteries 3C can be suppressed. As a material of each of the heat-radiating members 61, for example, the graphite material described in the fourth embodiment can be used.

In the power generation device according to the present invention, further, the heat-radiating member is more preferably adhered to a surface of the secondary battery. In the example shown in Fig. 4, heat-radiating members 62 and 63 formed of the same material as the heat-radiating member 61 are disposed on the surfaces of the plurality of secondary batteries 3C to be adequately bridged between these secondary batteries 3C. In the shown example, the heat-radiating member 62 is longitudinally formed to be longer than the heat-radiating member 63. In this way, the heat-radiating member is adhered to the surface of the secondary battery, and thereby an increase in temperature of this secondary battery can be remarkably suppressed.

In the power generation devices 1, 11, 12, 13, 101, 111, 112, 113, and 114 of the respective embodiments, the example in which the internal space 4A of the outer casing 4 is divided by the low heat conducting material 5 or 15 or the heat reflector 8 or 18, and thereby the plurality of chambers are formed has been described, but the invention is not limited thereto. Although not shown, for example, the internal space of the outer casing may be divided using a plate member formed of a material other than the insulating material, and the insulating material may be adhered to an upper surface side of the plate member forming the chamber in which the secondary battery is installed, i.e. to the photoelectric conversion module side. Even in a case having this constitution, as described above, since the radiant heat directed from the photoelectric conversion module to the secondary battery side is obstructed, an effect of making it possible to suppress an increase in temperature of the secondary battery is obtained.

Further, in the power generation devices 1, 11, 12, 13, 101, 111, 112, 113, and 114 of the respective embodiments, a circuit (not shown) in which the photoelectric conversion module 2 and the secondary battery 3 are electrically connected, and electric power from the photoelectric conversion module 2 can be stored in the secondary battery 3, and a circuit (not shown) for recharging and discharging the secondary battery 3 are preferably provided.

Moreover, a circuit used to supply electric power for driving a light-emitting device (not shown) or each electronic appliance from the secondary battery 3 may be provided. In addition, this light-emitting device or each electronic appliance can be disposed, for instance, inside or outside the outer casing 4 in which the power generation device 1 is housed.

Components in each embodiment described above and combinations thereof are one example, and additions, omissions, substitutions, and other modifications of the constitution are possible without departing from the spirit of the present invention. The present invention is not limited by each embodiment and each example.

### [Reference Signs List]

1, 11, 12, 13, 101, 111, 112, 113, 114 Power generation device provided with secondary battery (power generation device)
2 Photoelectric conversion module
2a Light-receiving surface
2b Lower surface
3, 3A, 3B, 3C Secondary battery
3a Upper surface
3b Lower surface
31 Package
31a Sealing part
32 Positive electrode collector
32a Positive electrode terminal
32b Connecting part
33 Negative electrode collector
33a Negative electrode terminal
33b Connecting part
4 Outer casing
4A Internal space
4a Upper surface opening
4b Bottom plate
4c Lateral plate
41 Opening
45,46 Space
5, 15 Low heat conducting material (insulating material)
8, 18 Heat reflector (insulating material)
16 Tubular member
16a Opening
17A, 17B Heat-radiating member
17a, 17b End
61, 62, 63 Heat-radiating member
L Shortest distance
H Heat source region

## Claims

1. A power generation device provided with a secondary battery, comprising:
a photoelectric conversion module; a secondary battery electrically connected to the photoelectric conversion module; and an outer casing in which the photoelectric conversion module and the secondary battery are installed,
wherein an insulating material is installed on at least a part of a space between the photoelectric conversion module and the secondary battery to be interposed between the photoelectric conversion module and the secondary battery.

2. The power generation device according to claim 1, wherein:
the internal space of the outer casing is divided by the insulating material, thereby forming a plurality of chambers; and
the secondary battery is installed in at least one of the plurality of chambers.

3. The power generation device according to claim 1 or 2, wherein the insulating material is a low heat conducting material.

4. The power generation device according to claim 1 or 2, wherein the insulating material is a heat reflector.

5. The power generation device according to claim 1 or 2, wherein the insulating material is laminated on a low heat conducting material, and the low heat conducting material is disposed at the photoelectric conversion module side.

6. The power generation device according to any one of claims 1 to 5, wherein a heat-radiating opening is formed at any position of the outer casing.

7. The power generation device according to claim 6, wherein:
the secondary battery includes a positive electrode terminal connected to a positive electrode collector, and a negative electrode terminal connected to a negative electrode collector; and
the opening formed in the outer casing is disposed to cause external air to linearly flow in toward a heat source region including a region connecting a connecting part between the positive electrode terminal and the positive electrode collector and a connecting part between the negative electrode terminal and the negative electrode collector at a shortest distance.

8. The power generation device according to any one of claims 1 to 7, wherein a heat-radiating member is adhered to at least one of a surface opposite to a light-receiving surface of the photoelectric conversion module and a surface of the secondary battery.
